# DEMANDE DE BREVET EUROPEEN

(11) **EP 1 858 259 A1**
(43) Date de publication de la demande: **21.11.2007**
(21) Numéro de dépôt: 07108290.3
(22) Date de dépôt: 15.05.2007
(51) Int. Cl.: H04N 5/74, G02B 26/08

(54) **Dispositif de projection d'images nocturnes et diurnes, notamment lors de l'entrainement à la conduite de véhicules**

(30) Priorité: 19.05.2006 FR 0604509
(71) Demandeur: THALES, 92200 Neuilly sur Seine (FR)
(72) Inventeur: Fontaine, Jean-Jacques, 95610, ERAGNY SUR OISE (FR); Frapin, Pascal, 95000, CERGY (FR)
(74) Mandataire: Lucas, Laurent Jacques

(57) **Abrégé**

La présente invention concerne un dispositif de projection d'images nocturnes et diurnes, notamment lors de l'entraînement à la conduite de véhicules.

Le dispositif utilise une matrice à micro-miroirs (26) comportant une chaîne principale d'illumination (21, 24) de la matrice et d'une chaîne d'illumination (51, 53) redondante. La chaîne d'illumination redondante (51, 53) comporte au moins un moyen de filtrage de la lumière adapté à la projection d'une image pour une vision nocturne.

L'invention peut être utilisée dans le cadre d'un entraînement à la conduite de nuit à l'aide d'un système intensificateur de lumière, par exemple des jumelles de vision nocturnes.

## Description

La présente invention concerne un dispositif de projection d'images nocturnes et diurnes, notamment lors de l'entraînement à la conduite de véhicules. Cette invention peut notamment être utilisée dans le cadre d'un entraînement à la conduite de nuit à l'aide d'un système intensificateur de lumière, par exemple des jumelles de vision nocturne.

L'entraînement à la conduite de véhicule terrestre ou aérien à l'aide d'un système intensificateur de lumière dans des conditions de nuit profonde par exemple, peut se faire grâce à des moyens de simulation de l'environnement qui sont avantageusement moins coûteux et plus simples à mettre en oeuvre que les conditions réelles. Il convient cependant de restituer l'environnement le plus fidèlement possible et notamment la perception des images nocturnes. A cette fin, plusieurs types de systèmes de simulation ont été développés.

Tout d'abord un système de simulation de la fonction des intensificateurs de lumière qui consiste à remplacer ces derniers par un micro-moniteur sur lequel est affichée une image de synthèse calculée de telle façon que l'image observée sur le micro-moniteur ait le même rendu que l'image réelle vue au travers des intensificateurs de lumière. Cette solution est coûteuse à mettre en oeuvre car elle nécessite d'engager la fabrication d'un système spécifique. Ce système devant reproduire les effets spéciaux liés aux intensificateurs de lumière comme par exemple le contrôle automatique du gain, les halos, le bruit. Mais il doit aussi intégrer un dispositif de détection de la position de tête afin d'afficher les images correspondant à la direction d'observation pour rendre compte le plus fidèlement possible des zones masquées dans le monde réel par la présence d'un montant de pare brise par exemple.

Un autre système utilise une stimulation du système intensificateur de lumière réel en générant une image, qui observée grâce au système d'intensificateur de lumière, rend le même résultat que si les images visionnées étaient issues d'un environnement réel. La difficulté réside dans le fait de produire des images avec un bon contraste et un niveau de noir parfait, et notamment à conserver des images de feux suffisamment lumineuses en présence d'un environnement sombre. Ces conditions sont remplies par des systèmes utilisant des projecteurs composés de tubes à rayons cathodiques. Les tubes à rayon cathodique ont en effet une grande dynamique de luminosité avec en particulier un noir très profond. Ce système est notamment décrit par la demande de brevet français n°98 14983. Cependant les systèmes à base de tubes à rayons cathodiques sont difficiles à régler et coûteux tant au niveau de l'achat que de la maintenance. De plus les tubes à rayon cathodiques sont de moins en moins répandus et visent à être remplacés par des technologies moins coûteuses, nécessitant peu d'entretien et peu de réglages spécifiques comme les projecteurs à micro-miroirs. En outre les tubes à rayons cathodiques possèdent l'inconvénient d'avoir des performances de luminosité réduites ce qui nuit à l'utilisation de ce système à des fins d'entraînement à la conduite de jour.
Cependant l'utilisation des projecteurs à micro-miroirs même si elle donne de très bons résultats pour le rendu des paysages de jour est mal adaptée aux paysages de nuit du fait du faible contraste des images et du niveau de noir trop élevé. De tels projecteurs ne sont donc pas bien adaptés à l'entraînement pour la conduite de nuit.

Un but de l'invention est notamment de pallier les inconvénients précités. A cet effet, l'invention a pour objet un dispositif de projection d'images utilisant une matrice à micro-miroirs, comportant une chaîne principale d'illumination de la matrice et une chaîne d'illumination redondante, dans lequel la chaîne d'illumination redondante comporte au moins un moyen de filtrage de la lumière adapté à la projection d'une image pour une vision nocturne.
La chaîne principale est par exemple inhibée.
La chaîne redondante peut être composée d'une source lumineuse et d'une roue à filtres.
La roue à filtres de la chaîne redondante est par exemple adaptée de façon à réduire la transmission de la lumière dans les longueurs d'ondes intensifiées par le système de vision.
Dans un autre mode de réalisation, la roue à filtres est composée de deux ouvertures de chacune des couleurs suivantes : rouge vert et bleu, l'une des ouvertures rouge étant pourvue d'un filtre gris et la seconde masquée.

Dans un autre mode, la roue à filtres comporte par exemple quatre ouvertures de couleur rouge, vert, bleu et blanc, les couleurs rouge et blanc étant atténuées grâce à une filtre gris.
La roue à filtres peut aussi comporter trois ouvertures de couleur rouge, vert et bleu, seule la couleur rouge étant atténuée par l'ajout d'un filtre gris.
Avantageusement, la roue à filtres peut être utilisée pour une vision scotopique, elle est alors adaptée en ajoutant un filtre gris sur chacune des couleurs de la roue, le filtre adapté sur la couleur rouge étant plus foncé que sur les autres couleurs.

L'invention a notamment pour principaux avantages qu'elle s'adapte à des matériels existant, qu'elle est économique et qu'elle est simple à mettre en oeuvre ainsi qu'à utiliser.

D'autres caractéristiques et avantages de l'invention apparaîtront à l'aide de la description qui suit, faite en regard des dessins annexés qui représentent :
- la figure 1 : un exemple de simulation pour l'entraînement à la conduite nocturne ;
- la figure 2 : le principe d'un projecteur à micro-miroirs ;
- la figure 3 : le principe de la réflexion sur des micro-miroirs ;
- la figure 4 : le diagramme de longueur d'onde de la lumière à traiter pour une simulation ;
- la figure 5 : un dispositif de projection à micro-miroirs mis en oeuvre dans le cadre de l'invention.

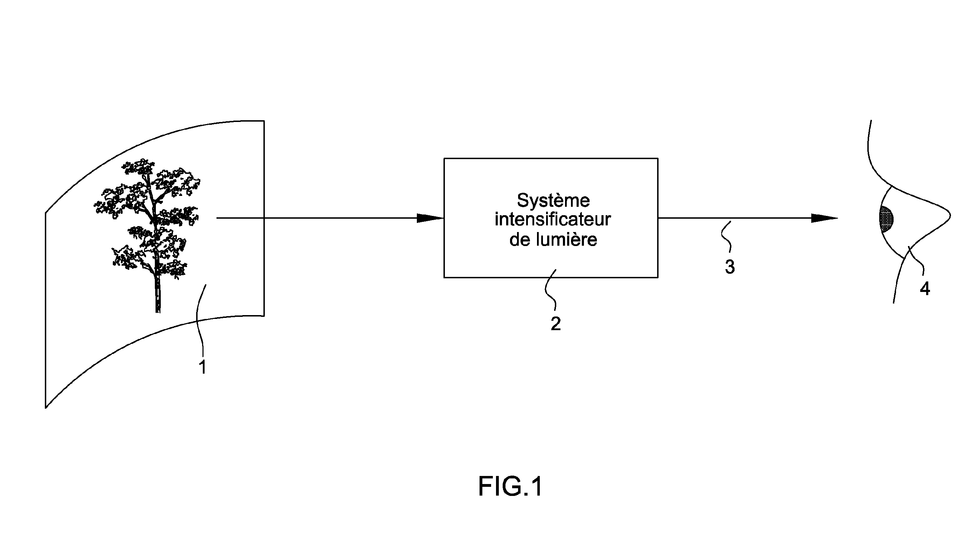

La figure 1 présente un exemple de simulation mise en oeuvre pour l'entraînement à la conduite nocturne à l'aide d'un système intensificateur de lumière, comme par exemple des jumelles de vision nocturne. L'objectif du système de simulation est de projeter une image 1 perçue en entrée d'un intensificateur de lumière 2. Dans l'exemple de la figure 1, l'image 1 reproduit un paysage nocturne. L'intensificateur 2 génère en sortie un signal lumineux 3 à destination d'un observateur 4, ce signal reproduisant l'image intensifiée. L'image de synthèse 2 produite par le dispositif est projetée sur un écran qui peut être sphérique ou cylindrique et qui permet à l'observateur de percevoir le paysage en périphérie de l'intensificateur de lumière. L'image peut donc reproduire de façon réaliste le paysage extérieur mais aussi l'environnement direct de l'observateur comme la structure du véhicule dans lequel il se trouve par exemple. Dans le cadre de l'invention, l'image de synthèse est générée par un projecteur à micro-miroirs.

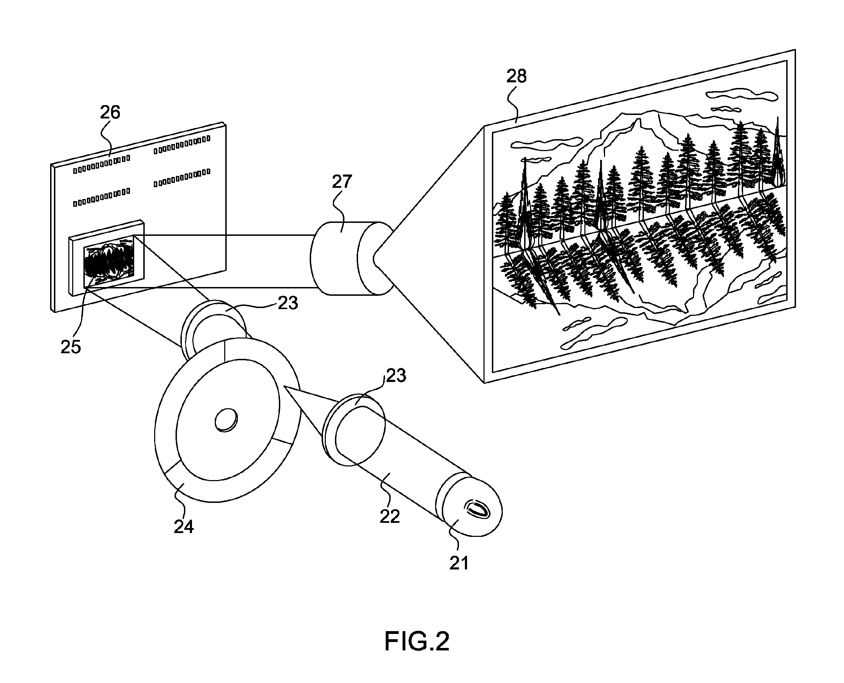

La figure 2 illustre le principe général d'un projecteur à micro-miroirs. Ce dispositif est composé d'une source lumineuse 21 qui émet un signal lumineux monochromatique 22 vers un système de lentilles 23 qui fait converger l'image vers une roue à filtres 24 composée par exemple de six ouvertures de couleurs rouge, verte et bleue répétée chacune deux fois et ceci afin que l'oeil de l'observateur ne puisse saisir le passage d'une couleur à l'autre sans avoir besoin d'accélérer la vitesse de rotation de la roue. Cette roue à filtres 24 tourne de manière synchrone avec l'affichage de l'image produite par le générateur d'images de synthèse 26 sur la matrice de micro-miroirs 25 du projecteur. Cette image est ensuite renvoyée par les micro-miroirs sur une lentille 27 afin d'être projetée sur un écran 28. Chaque micro-miroir du projecteur permet de projeter séquentiellement les images relatives à chaque couleur, la couleur étant déterminée par la position de la roue à filtres par rapport au faisceau lumineux. La roue à filtres est classiquement composée de trois filtres de couleur rouge, vert et bleu. On peut aussi lui adjoindre un secteur blanc plus ou moins large afin d'augmenter la luminosité au détriment d'une moins grande saturation des couleurs. Elle peut aussi être constituée, de six ouvertures permettant de répéter deux fois les couleurs rouge vert et bleu ce qui permet d'afficher de façon deux fois plus rapide le cycle rouge, vert, bleu sans avoir à doubler la vitesse de la roue. Ceci permet en outre de rendre invisible à l'oeil la transition entre les images des différentes couleurs.

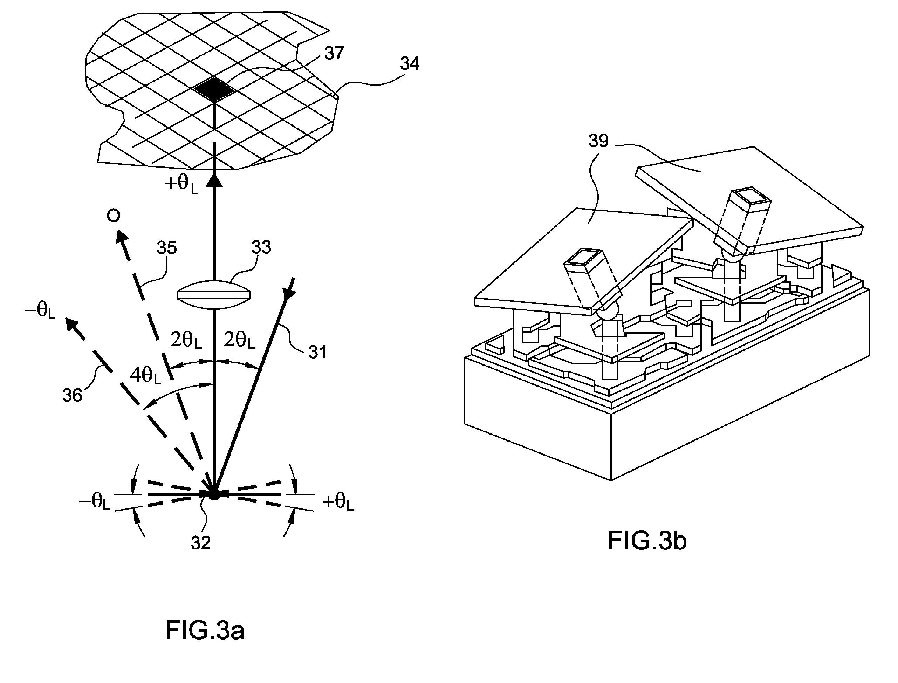

Les figures 3a et 3b présentent le dispositif de réflexion des micro-miroirs 39. La matrice des micro-miroirs permet de réfléchir vers l'écran la lumière préalablement filtrée par la roue à filtres. Les micro-miroirs de la matrice peuvent s'orienter de manière indépendante les uns des autres. Leur orientation dépend de façon connue de l'image calculée à afficher. Ainsi chaque micro-miroir peut prendre plusieurs positions :
- une position correspondant à un angle +θ_{L} avec l'horizontale qui permet de renvoyer le rayon de lumière 31 reçu vers la lentille de projection 33 pour donner un point 37 de l'image 34,
- une position correspondant à l'angle -θ_{L} avec l'horizontale qui permettent de réfléchir le rayon de lumière reçu 31 vers un piège à lumière. Le rayon n'aura dans ce cas aucune contribution à l'image affichée,
- une position de repos correspondant à l'angle nul.
Ce dispositif permet de faire varier le temps pendant lequel le miroir est dans la position réfléchissant la lumière à travers l'optique : plus le temps est bref, plus l'image résultante est sombre. Ainsi pour rendre une image de nuit, les temps de réflexion des micro-miroirs peuvent être diminués en complément du filtrage effectué par l'intermédiaire de la roue à filtres.

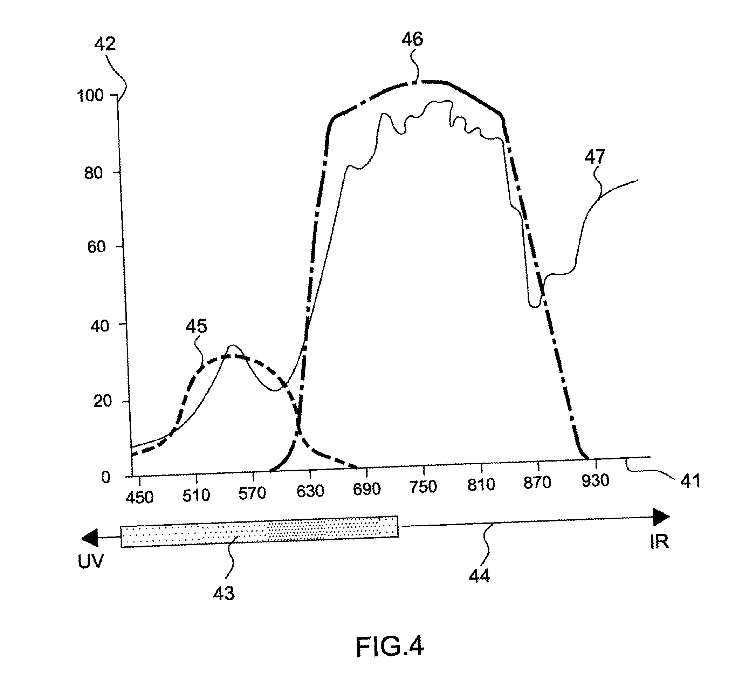

La figure 4 illustre le spectre de la lumière émise par un paysage en regard des sensibilités liées aux différents types de capteurs que sont l'oeil humain et les jumelles de vision nocturne. Sur le graphique de la figure 4, l'axe des abscisses 41 est gradué selon la longueur d'onde de la lumière émise. Cette longueur d'onde varie dans le spectre visible 43 du bleu au rouge et ensuite passe dans le spectre de l'infrarouge 44. L'axe des ordonnés 42 présente la réponse des différents senseurs utilisés suivant le spectre 47 de lumière émise par un paysage. Une première courbe 45 représente la vision photopique donc la lumière captée par un oeil humain de jour. Une seconde courbe 46 présente quant à elle la lumière captée par des jumelles de vision nocturne sur les différentes longueurs d'onde. Ces deux courbes 45 et 46 montrent que les jumelles de vision nocturnes sont beaucoup plus sensibles aux longueurs d'ondes situées dans le rouge et aux limites de l'infrarouge alors que l'oeil humain lui est plus sensible aux longueurs d'onde proches du bleu lors de la vision de jour dite photopique et proche du vert lors de la vision de nuit dite scotopique. Dans le cadre de la simulation d'un paysage nocturne, il conviendra donc de réduire le niveau de transmission de la lumière dans la longueur d'onde correspondant au rouge et à l'infrarouge afin de ne pas avoir une image représentant par exemple des feux trop lumineux par rapport au reste du paysage au niveau des jumelles, ce qui rendrait l'image difficilement interprétable. Par contre, les longueurs d'ondes du bleu au vert peuvent rester inchangées, n'étant pas perçues par les jumelles mais uniquement par l'oeil en vision périphérique des jumelles. La modification du niveau de transmission pour une longueur d'onde donnée est effectuée au moyen de la roue à filtres, en plaçant un filtre optique adapté au niveau de transmission souhaité devant le filtre de la couleur appropriée. En complément de la modification de transmission dans une longueur d'onde, afin d'assombrir l'image, il est possible d'ajouter un filtre gris ou densité devant chacune des couleurs sur la roue à filtres. A titre d'exemple, dans le cas de la roue à filtres possédant six ouvertures, le premier filtre rouge est muni d'une densité neutre, donc le rayonnement correspondant est totalement transmis, le second filtre rouge est remplacé soit par un masque, soit par un filtre gris sombre et les autres filtres restent inchangés.

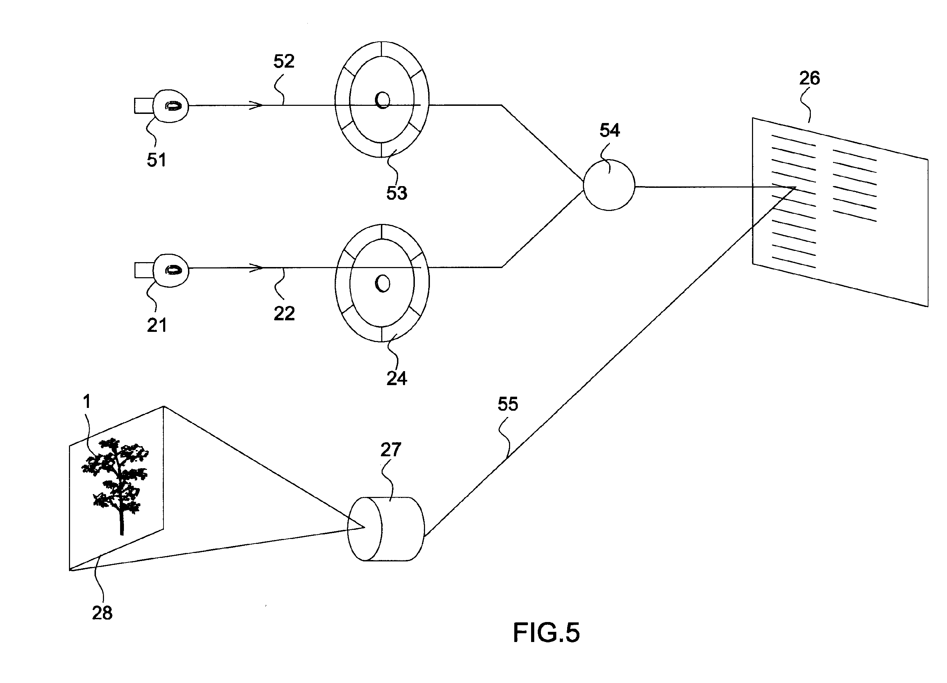

La figure 5 représente un dispositif de projection selon l'invention. Dans les projecteurs communément utilisés, la chaîne principale de projection illustrée par la figure 2 est en fait doublée d'une seconde chaîne redondante. Cette seconde chaîne est composée d'une lampe 51 qui permet d'augmenter la luminosité générale du dispositif et d'une roue à filtres 53 qui permet de palier à la durée de vie limitée des roues à filtres. Ainsi le projecteur à micro-miroirs se trouve pourvu de deux lampes 21 et 51, de deux roues de filtres 24 et 53 ainsi que d'un commutateur 54. La lumière est ensuite classiquement dirigée vers la matrice à micro-miroirs 26 du dispositif de projection selon l'invention afin d'être transformée en image et projetée via la lentille 27 sur l'écran 28.
En fonctionnement normal, la seconde chaîne ou chaîne redondante est inhibée. Elle peut être aussi activée afin d'intensifier la luminosité de l'image projetée pour un paysage diurne par exemple. Elle est évidemment aussi utilisée pour remplacer la chaîne principale en cas de défaillance de cette dernière. Cette chaîne redondante a donc pour objectif de renforcer la chaîne principale ou de la remplacer en cas de panne.
Dans la présente invention, le dispositif mis en oeuvre exploite avantageusement cette double chaîne afin mettre en oeuvre le projecteur aussi bien pour des simulations de situations diurnes que pour des simulations de situations nocturnes. En effet une des deux chaînes, par exemple celle composée par la lampe 23 et le filtre 24, peut être utilisée comme moyen de projection d'un paysage diurne et la seconde chaîne composée de la lampe 51 et du filtre 53 peut être utilisée pour projeter un paysage de nuit vu par des jumelles de vision nocturnes par exemple. Le filtre 53 est alors adapté afin d'optimiser le signal perçu au niveau des jumelles de vision nocturne comme par exemple pour le filtre à six ouvertures décrit au niveau de la figure 4.
Le basculement entre la projection d'un paysage de nuit et la projection d'un paysage de jour se fait donc astucieusement en inhibant par exemple la chaîne de projection 21, 22, 23 et en activant la chaîne de projection 51, 52, 53 au moyen du commutateur 54.
Le filtre de la seconde chaîne peut également, selon les besoins, être remplacé par un filtre à quatre ouvertures. Toujours pour adapter une image à une vision à travers des jumelles de vision nocturne, le filtre rouge de la roue est muni d'une densité neutre, les filtres vert et bleu restent inchangés et le filtre blanc est remplacé par un filtre gris neutre afin de réduire la luminosité. De la même manière, un filtre à trois ouvertures peut éventuellement être adapté en ajoutant au filtre rouge un filtre gris afin de réduire la transmission dans cette longueur d'onde, les autres filtres restant inchangés.

Dans d'autres utilisations de l'invention, le filtre placé au niveau de la deuxième chaîne peut avantageusement être adapté non pas à un paysage de nuit visionné à l'aide d'intensificateur de lumière mais à une vision scotopique d'un paysage nocturne, c'est à dire vu par l'oeil. Ce filtre peut comporter par exemple trois ouvertures de couleur rouge, vert et bleu. Dans le cas d'une vision nocturne, compte tenu du fait que l'oeil est plus sensible aux faibles longueurs d'onde, la transmission de la lumière dans la longueur d'onde correspondant au rouge est atténuée grâce à un filtre gris. De plus l'ensemble des couleurs est atténué de manière uniforme afin de rendre compte de la faible luminosité générale du paysage.

Un avantage de l'invention est qu'elle s'adapte parfaitement et de manière économique à des projecteurs déjà existant. Par ailleurs le dispositif selon l'invention est simple à mettre en place puisqu'il suffit de changer le filtre utilisé dans la chaîne redondante par un filtre spécifique adapté à l'utilisation pour la projection d'images nocturnes.
Un autre avantage de l'invention est qu'elle permet une utilisation simplifiée du système de simulation en ce qu'il n'y a aucun réglage spécifique et complexe à mettre en oeuvre pour utiliser le projecteur, soit afin de projeter une image nocturne, soit afin de projeter une image diurne. On peut ainsi facilement basculer d'un mode de simulation à l'autre.

## Revendications

1. Dispositif de projection d'images comportant une matrice à micro-miroirs (26), une chaîne principale d'illumination (21, 24) de la matrice (26) et une chaîne d'illumination (51, 53) redondante de la matrice (26), **caractérisé en ce que** la chaîne d'illumination redondante (51, 53) comporte au moins un moyen de filtrage de la lumière adapté à la projection d'une image pour une vision nocturne.

2. Dispositif selon la revendication 1 **caractérisé en ce que** la chaîne principale est inhibée.

3. Dispositif selon l'une quelconque des revendications précédentes **caractérisé en ce que** la chaîne redondante est composée d'une source lumineuse (51) et d'une roue à filtres (53).

4. Dispositif selon l'une quelconque des revendications précédentes **caractérisé en ce que** la roue à filtres de la chaîne redondante (53) est adaptée de façon à réduire la transmission de la lumière dans les longueurs d'onde intensifiées par un système de vision.

5. Dispositif selon la revendication 4 **caractérisé en ce que** la roue à filtres est composée de deux ouvertures de chacune des couleurs suivantes : rouge, vert et bleu, l'une des ouvertures rouge étant pourvue d'un filtre gris et la seconde masquée.

6. Dispositif selon la revendication 4 **caractérisé en ce que** la roue à filtres comporte quatre ouvertures de couleur rouge, vert, bleu et blanc, les couleurs rouge et blanc étant atténuées grâce à un filtre gris.

7. Dispositif selon la revendication 1 ou 2 **caractérisé en ce que** la roue à filtres comporte trois ouvertures de couleur rouge, vert et bleu, seule la couleur rouge étant atténuée par l'ajout d'un filtre gris.

8. Dispositif selon la revendication 1 ou 2 **caractérisé en ce que** la roue à filtres utilisée pour une vision scotopique est adaptée en ajoutant un filtre gris sur chacune des couleurs de la roue, le filtre adapté sur la couleur rouge étant plus foncé que sur les autres couleurs.
